Europäisches Patentamt

European Patent Office

Office européen des brevets

(11) Publication number: **0 214 774 B1**

# EUROPEAN PATENT SPECIFICATION

(45) Date of publication of patent specification: **29.05.91**  (51) Int. Cl.⁵: **H02K 3/28,** H02K 19/34, H02K 21/48

(21) Application number: **86306239.4**

(22) Date of filing: **11.08.86**

(54) **Three-phase alternator.**

(30) Priority: **09.09.85 US 774082**

(43) Date of publication of application:
**18.03.87 Bulletin 87/12**

(45) Publication of the grant of the patent:
**29.05.91 Bulletin 91/22**

(84) Designated Contracting States:
**CH DE LI**

(56) References cited:
**GB-A- 771 300**
**US-A- 1 832 700**
**US-A- 2 778 653**
**US-A- 3 821 573**
**US-E- 19 433**

(73) Proprietor: **GENERAL MOTORS CORPORA-TION**
**General Motors Building 3044 West Grand Boulevard**
**Detroit Michigan 48202(US)**

(72) Inventor: **Becker, Robert William**
**30 West 252 Bedford Lane**
**Warrenville Illinois 60555(US)**
Inventor: **Keck, Timothy Allan**
**27 Winrock Road**
**Montgomery Illinois 60538(US)**
Inventor: **Madsen, John Ernst**
**Route 1**
**Lemont Illinois 60439(US)**

(74) Representative: **Denton, Michael John et al**
**Patent Section Vauxhall Motors Limited 1st Floor Gideon House 26 Chapel Street**
**Luton Bedfordshire LU1 2SE(GB)**

## Description

This invention relates to a three-phase alternator having two sets of electrically isolated stator windings for supplying power to two different loads, and more particularly to a stator winding arrangement which reduces magnetic coupling between the stator winding sets.

In prior locomotive drive systems including an engine driven three-phase alternator and two or more DC traction motors, it has been known to wind the three-phase alternator with two or more separate sets of output (stator) windings and to separately rectify the generated outputs for application to respective traction motor windings. In such systems, circumferentially adjacent stator coils are generally connected in series to define winding components, and such winding components are generally distributed symmetrically around the stator so that one of the sets of stator windings can be loaded while the other is unloaded, if desired. A system of this type is shown and described in the US Patent No 3,340,448.

Three-phase alternators having twin winding also find application to drive systems incorporating AC traction motors. In such a system, each stator winding set is connected to supply AC power to one or more AC traction motors through an AC/DC converter and a DC/AC inverter. An electronic control unit responsive to various motor and demand parameters controls the gating of thyristors within the DC/AC inverters and AC/DC converters to individually regulate the tractive effort of the AC traction motors. In this type of drive system, reliable control of the thyristors of the AC/DC converter and DC/AC inverter requires that magnetic coupling between the two sets of stator windings be minimized. In other words, the electronic control unit is sensitive to transient voltages induced in one stator winding set by current interruption or changes in the other stator winding set, and may make an erroneous control response thereto.

Magnetic coupling between the stator winding sets of such a three-phase alternator is primarily due to slot leakage between winding elements disposed in the same stator slot. Accordingly, the magnetic coupling between stator winding sets can be minimized if any given stator slot contains winding elements of only one or the other of the stator winding sets. However, this objective cannot be achieved with conventional three-phase winding arrangements wherein circumferentially adjacent stator coils are connected in series to define winding components unless the winding pitch is made relatively low. Low winding pitch reduces the output voltage of the three-phase alternator, and is therefore undesirable.

US-E-19,433 discloses the features specified in the precharacterising portion of Claim 1. However, the arrangement is such that the machine is not magnetically balanced. US-A-3,821,573 discloses a multi-set stator have a phase angle difference of 30 electrical degrees.

The primary object of the present invention is to provide an improved winding arrangement for the stator of a three-phase alternator having twin winding wherein the winding pitch is maintained relatively high and magnetic coupling between the stator winding sets due to slot leakage is substantially eliminated.

To this end, a three-phase alternator in accordance with the present invention is characterised over US-E-19,433 by the features specified in the characterising portion of Claim 1.

The number of stator slots and stator coils in a three-phase alternator is related to the number of rotor poles P. More particularly, the number of stator slots and stator coils is an integral multiple of 3P; algebraically, 3nP, where n is an integer. This invention is directed to three-phase alternators where n is greater than or equal to 2, as is generally the case in practical machines. The stator coils form a group of three phase coils for each pole pitch of the rotor, each such group comprising three sets of n consecutive or successively wound single-phase coils (the stator coils).

Conventionally, the individual stator coils of any such set of n successively wound single-phase coils all belong to only one of the stator winding sets, and are connected in series to form a winding component. In turn, circumferentially adjacent groups of three-phase coils belong to different stator winding sets. According to this invention, however, circumferentially adjacent stator coils belong to different stator winding sets, and the stator coils are connected such that the winding components comprise one or more stator coils from one group of three-phase coils and one or more stator coils from another group of three-phase coils. More particularly, each winding component comprises a serial connection of INT(n/2) stator coil(s) from one group of three-phase coils and n-INT(n/2) stator coil(s) from another group of three-phase coils, where INT(n/2) is the truncated integer portion of the decimal number (n/2). When the stator coils are connected in this manner, and the stator coils each span an odd number of stator slots, the stator coils disposed in any given stator slot belong to only one of the sets of stator windings, and magnetic coupling between the stator winding sets due to slot leakage is avoided. In this regard, a stator coil is said to span an odd number of stator slots when the stator coil is wound such that there is an odd number of stator slots between the stator slots in which the stator coil turns are disposed. Several choices of winding pitch are available, including relatively high pitches which yield relatively high output voltage from the three-phase alternator.

This invention is now described, by way of example, with reference to the accompanying drawings, in which:-

Figure 1 is a block diagram of a drive system of the type in which the winding arrangement of this invention has its primary application;

Figure 2 is a winding schematic for a ten-pole, twin winding, three-phase alternator having two groups of five parallel connected three phase windings; and

Figure 3 is a layout or doily diagram of a winding arrangement for a ten-pole, ninety stator slot, twin winding, three-phase alternator according to this invention.

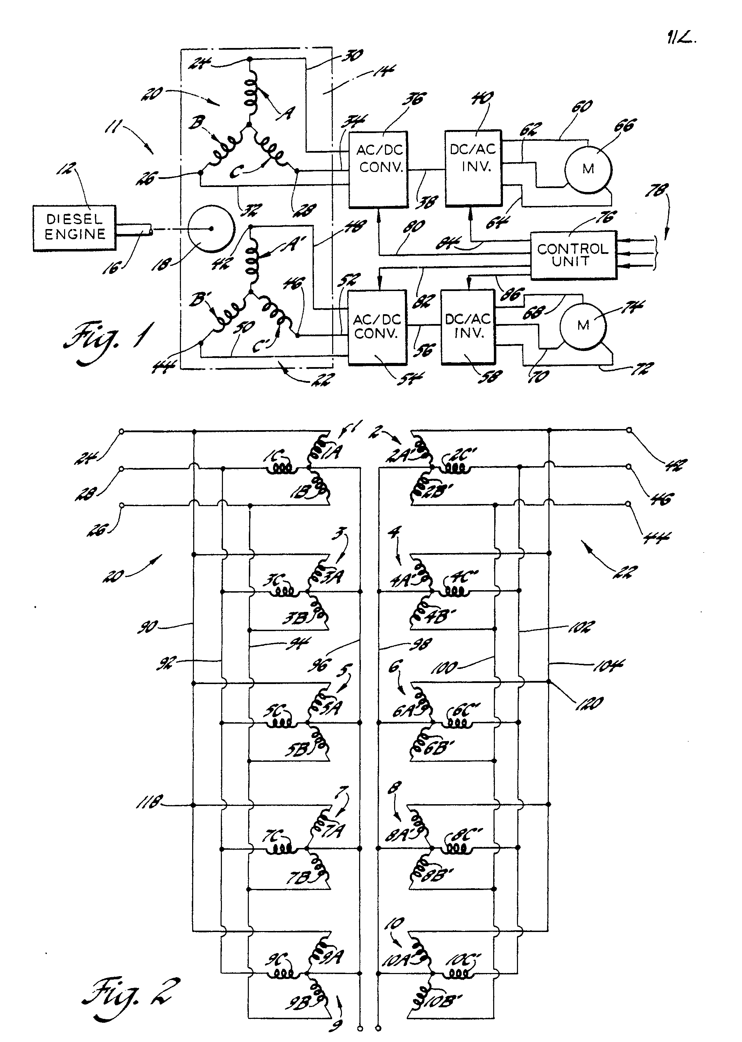

Referring now more particularly to Figure 1, the reference numeral 11 generally designates a locomotive AC power source including a diesel engine 12 and a three-phase alternator 14 having a twin winding. A drive shaft 16 of diesel engine 12 rotatably drives a rotor 18 of three-phase alternator 14 and three-phase voltages are thereby generated in stator winding sets 20 and 22. Each stator winding set 20, 22 comprises three WYE-connected phase windings. The phase windings of the stator winding set 20 are designated A, B and C; the phase windings of the stator winding set 22 are designated A', B' and C'. Winding terminals 24, 26 and 28 of the stator winding set 20 are connected via lines 30, 32 and 34 to an AC/DC converter 36, the DC output of which is connected via line 38 to a DC/AC inverter 40. Similarly, winding terminals 42, 44 and 46 of the stator winding set 22 are connected via lines 48, 50 and 52 to an AC/DC converter 54, the DC output of which is connected via line 56 to a DC/AC inverter 58. The three-phase output of DC/AC inverter 40 is connected via lines 60, 62 and 64 to a three-phase AC traction motor 66, and the three-phase output of DC/AC inverter 58 is connected via lines 68, 70 and 72 to a three-phase AC traction motor 74. An electronic control unit 76 is responsive to various motor and demand parameters as indicated generally by lines 78 for controlling the gating of thyristors or like semiconductor switch devices with the AC/DC converters 36, 54 and DC/AC inverters 40, 58 via lines 80-86 to individually regulate the tractive effort developed by the three-phase AC traction motors 66 and 74. It will be recognized, of course, that in locomotives having more than two traction motors, such other traction motors may be connected in parallel with the three-phase AC traction motors 66 and 74, or in series through additional DC/AC inverters, to form two individually regulated motor banks.

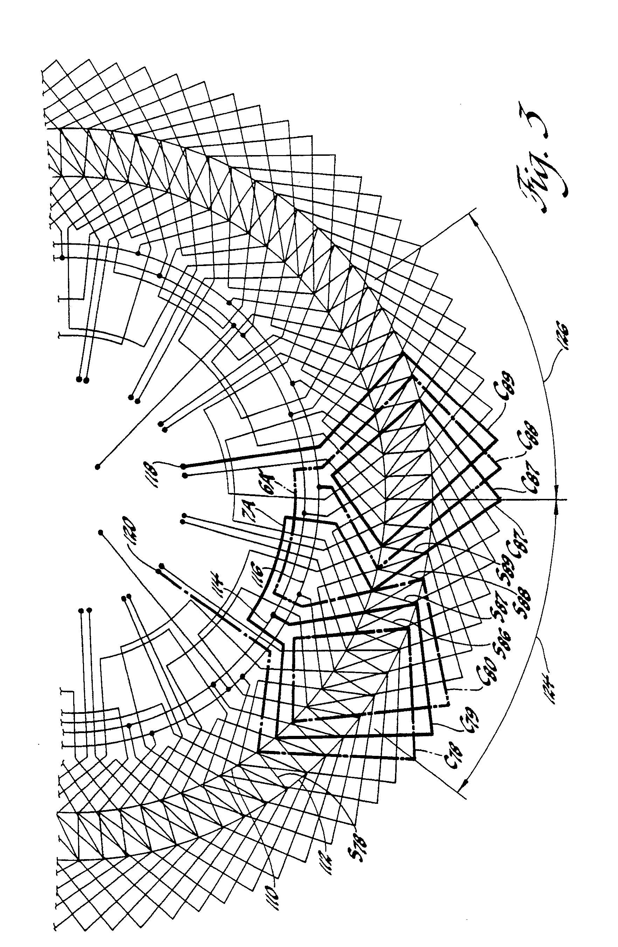

Figure 2 depicts the internal winding component connections for a three-phase alternator of the type shown in Figure 1 having a rotor having ten poles and therefore ten groups of three-phase windings (1-10) which are parallel connected in two groups of five, and are symmetrically distributed in stator slots. In the illustrated embodiment, the odd numbered three-phase windings 1, 3, 5, 7 and 9 are interconnected to form the stator winding set 20 having winding terminals 24, 26 and 28 as designated in Figure 1. The remaining or even numbered three-phase windings 2, 4, 6, 8 and 10 are interconnected to form the stator winding set 22 having winding terminals 42, 44 and 46 as designated in Figure 1. Each of the three-phase windings (1-10) comprises three winding components which are WYE-connected and single phase. The winding components of the stator winding set 20 are further designated by the letters A, B and C; the winding components of the stator winding set 22 are further designated by the letters A', B' and C'. In the stator winding set 20, the winding components of like phase are connected in parallel via lines 90-96 to form the phase windings A, B, and C depicted in Figure 1. For example, the winding components 1A, 3A, 5A, 7A and 9A are connected in parallel via the lines 90 and 96 to form the phase winding A. Likewise, in the stator winding set 22, the winding components of like phase are connected in parallel via lines 98-104 to form the phase windings A', B' and C' depicted in Figure 1. For example, the winding components 2A', 4A', 6A', 8A' and 10A' are connected in parallel via the lines 98 and 104 to form the phase winding A'. It will be noted that this is the same general phase winding connection pattern depicted in the above-mentioned US Patent No. 3,340,448.

Each of the winding components (1A, etc) depicted in Figure 2 comprises two or more serially connected stator coils. Figure 3 depicts a stator winding connection diagram for a three-phase alternator as shown in Figure 2 having ninety stator slots and therefore ninety stator coils (three per winding component). There are thus nine stator slots per rotor pole pitch and each such pole pitch has disposed therein a group of three-phase coils, each such group comprising three sets of three, successively wound, single-phase coils (the stator coils). In algebraic denotation where P designates the number of rotor poles and $3nP$ designates the number of stator slots and stator coils, the illustrated embodiment represents a three-phase alternator wherein $P = 10$ and $n = 3$. The stator slots are represented by radial lines, representative ones of which are identified in Figure 3 by the subscripted letters $S_{78}$, $S_{86}$, $S_{87}$, $S_{88}$, and $S_{89}$. The stator coils are represented by angled lines, representative one of which are identified in Figure 3 by the subscripted letters $C_{78}$, $C_{79}$, $C_{80}$, $C_{87}$, $C_{88}$, and $C_{89}$, with stator coils $C_{78}$, $C_{79}$, $C_{80}$, or $C_{87}$, $C_{88}$, $C_{89}$, defining a set of three single-phase coils within a group of three-phase coils. The sides of two different stator coils are disposed in each stator slot -- one in an inner radial position, and one in an outer radial position. The inner radial position is represented by the concentric line 110; the outer radial position is represented by the concentric line 112. Each stator coil may comprise several turns of wire, but is illustrated as comprising only one turn. Each stator coil is wound such that one its sides is disposed in the inner radial position and the other of its sides is disposed in the outer radial position. For example, the turns of the stator coil $C_{78}$ are disposed in the inner radial position of the stator slot $S_{78}$ and the outer radial position of the the stator slot $S_{86}$. Circumferentially adjacent stator coils belong to different sets of stator winding sets 20 and 22; stator coils designated by odd numbered subscripts belong to the stator winding set 20 and stator coils designated by even numbered subscripts belong to the stator winding set 22.

In the illustrated embodiment, each winding component (1A, etc) comprises three stator coils which are connected in series. The neutral side of each winding component (1A, etc) belonging to the stator winding set 20 is connected to a conductor ring 114; the neutral side of each winding component (2A', etc) belonging to the stator winding set 22 is connected to a conductor ring 116. The other ends of the winding components are connected to stator terminals, two such stator terminals being designated by the reference numerals 118 and 120. By way of example, the winding component 7A comprises the stator coils $C_{79}$, $C_{87}$, and $C_{89}$; the neutral end of this winding component being connected to the conductor ring 114, and the other end being connected to the stator terminal 118. Similarly, the winding component 6A' comprises the stator coils $C_{78}$, $C_{80}$, and $C_{88}$; the neutral end of this winding component being connected to the conductor ring 116, and the other end being connected to the stator terminal 120.

According to this invention, magnetic coupling between the stator winding sets 20,22 is avoided if the following requirements are met. Firstly, the stator coils must be wound such that each spans an odd number of stator slots, and secondly, the stator coils must be connected to define winding components (1A, etc) such that circumferentially adjacent stator coils are connected to different stator winding sets and such that each winding component comprises stator coils from two different rotor pole pitches.

Referring to Figure 3, it will be seen that in the illustrated embodiment the stator coils each span seven stator slots. For example, the sides of coil $C_{78}$ are disposed in stator slots $S_{78}$ and $S_{86}$. Put another way, the sides of the stator coils are eight stator slots apart. Since the pitch of each rotor pole comprises nine stator slots, it may be said that in the illustrated embodiment the winding pitch is 8/9. According to the invention, other winding pitches including 6/9, 10/9, etc. would also be acceptable. The further winding requirements of this invention are illustrated in respect to the winding components 6A' and 7A which are disposed in the rotor pole pitches designated by the reference numerals 124 and 126. Winding component 7A is emphasized with heavy solid lines, and winding component 6A' is emphasized with heavy dashed lines. Winding component 6A' comprises the stator coils $C_{78}$ and $C_{80}$ from the rotor pole pitch 124, and the stator coil $C_{88}$ from the rotor pole pitch 126; as indicated in Figure 2, the winding component 6A' belongs to the stator winding set 22. Winding component 7A comprises the stator coil $C_{79}$ from the rotor pole pitch 124, and the stator coils $C_{87}$ and $C_{89}$ from the rotor pole pitch 126; as indicated in figure 2, the winding component 7A belongs to the stator winding set 20. In each winding component (1A, etc), it will be noted that the stator coil(s) taken from adjacent (and therefore opposite polarity) rotor pole pitches are wound in opposing sense to preserve the polarity of the individual stator coils.

Of particular note in respect to the illustrated embodiment of Figure 3 is that no stator slot contains coil sides from both of the stator winding sets 20,22. For the emphasized winding components 6A' and 7A, this feature is seen in respect to the stator slots $S_{87}$ and $S_{88}$. As a result, stator slot leakage between winding elements of the different stator winding sets 20,22 is avoided and the total magnetic coupling therebetween is minimized. For the application depicted in Figure 1 wherein the AC/DC converters 36 and 54 and the electronic control unit 76 are sensitive to voltages induced in one stator winding set due to current interruptions or changes in the other stator winding set, erroneous control responses due to such interruptions or changes are thereby avoided.

While this invention has been described in reference to the illustrated embodiment, it will be recognized that it is not limited thereto. As noted above, this invention applies to a three-phase alternator having a rotor having P poles and 3nP stator slots, where n is an integer greater than or equal to two. In a generalized embodiment, each winding component as defined herein will comprise INT(n/2) stator coils from one group of three-phase coils (one rotor pole pitch) and n-INT(n/2) stator coils from another group of three-phase coils (another rotor pole switch). In addition, it will be recognized that the winding arrangement of this invention will find application in systems other than the locomotive drive system depicted in Figure 1, and is therefore not limited thereto. Moreover, the like phase winding components of a given set of three-phase windings need not be connected in parallel as shown in Figure 2, but may be connected in series, if required.

## Claims

1. A three-phase alternator (14) including a rotor (18) having P-poles; and a stator having 3nP stator slots ($S_1$-$S_{90}$) and 3nP stator coils ($C_1$-$C_{90}$) disposed therein in overlapping relation to form P groups of three-phase coils, where n is an integer greater than or equal to 2; wherein each such group of three-phase coils comprise three sets of n successively wound single-phase coils, the single-phase coils being connected to define two electrically separate sets of stator windings (20,22) for supplying three-phase alternating current to diversely controlled electrical loads (66,74), each such set of stator windings comprising a group of winding components (1A-10C') for each phase, and each such winding component comprising n stator coils connected in series, characterised in that the stator coils ($C_1$-$C_{90}$) and the single-phase coils are one and the same, in that the stator coils ($C_1$-$C_{90}$) each span an odd number of stator slots ($S_1$-$S_{90}$), and the stator coils are connected such that circumferentially adjacent stator coils are connected in different sets of the stator winding sets (20,22), and in that each of the winding components (1A-10C') of a given set of stator winding sets comprises INT-(n/2) stator coil(s) from one group of three-phase coils and n-INT(n/2) stator coils from a different group of three-phase coils, whereby the stator coils disposed in any stator slot are connected in only one of the sets of stator winding sets, and magnetic coupling between the sets of stator winding sets due to slot leakage is avoided.

2. A three-phase alternator as claimed in Claim 1, characterised in that in any group of three-phase coils, n-INT(n/2) stator coil(s) in each set of n successively wound single-phase coils is/are connected in series with INT(n/2) stator coil(s) from another group of three-phase coils to define one of the winding components (1A-10C') for one of the sets of stator winding sets (20,22), and the remaining INT(n/2) stator coil(s) of that set of n successively wound single-phase coils is/are connected in series with n-INT(n/2) stator coil(s) from another group of three-phase coils to define one of the winding components for the other of the sets of stator winding sets.

3. A three-phase alternator as claimed in Claim 1 or Claim 2, characterised in that n equals 3; in that there are P/2 winding components (1A-10C') in each set of stator winding sets (20,22); and in that the stator coils ($C_1$-$C_{90}$) each span seven stator slots ($S_1$-$S_{90}$) to define a winding pitch of 8/9, such that in any group of three-phase coils, two stator coils in each set of three successively wound single-phase coils are connected in series with a stator coil from another group of three-phase coils to define one of the winding components for one set of stator winding sets (20,22), and one stator coil of that set of three successively wound single-phase coils is connected in series with two stator coils from the other group of three-phase coils to define one of the winding components for the other set of stator winding sets.

## Revendications

1. Alternateur triphasé (14) comprenant un rotor (18) ayant P-poles ; et un stator ayant 3nP encoches statoriques ($S_1$-$S_{90}$) et 3nP bobinages statoriques ($C_1$-$C_{90}$) disposés à l'intérieur en relation de chevauchement pour constituer P groupes de bobinages triphasés, ou n est un entier supérieur ou égal à 2 ; dans lequel chaque groupe de bobinages triphasés comprend trois jeux de n bobinages monophasés enroulés successivement, les bobinages monophasés étant connectés pour définir deux jeux d'enroulements statoriques (20,22), séparés électriquement, pour fournir du courant alternatif triphasé à des charges électriques (66,74) commandées séparément, chaque jeu d'enroulements statoriques comprenant un groupe de composants d'enroulement (1A-10C') pour chaque phase, et chaque composant d'enroulement comprenant n bobinages statoriques connectés en série, dans lequel les bobinages statoriques ($C_1$-$C_{90}$) et les bobinages monophasés ne font qu'un, dans lequel les bobinages statoriques ($C_1$-$C_{90}$) englobent chacun un nombre impair d'encoches statoriques ($S_1$-$S_{90}$), et dans lequel chacun des composants d'enroulement (1A-10C') d'un jeu donné parmi les jeux d'enroulements statoriques comprend partie entière (n/2) bobinage(s) statorique(s) d'un groupe de bobinages triphasés et n- partie entière (n/2) bobinages statoriques d'un groupe différent de bobinages triphasés, de telle manière que les bobinages statoriques disposés dans toute encoche statorique sont connectés dans un seul des jeux d'enroulements statoriques, caractérisé en ce que les

9 EP 0 214 774 B1 10

bobinages statoriques sont raccordés de telle manière que les bobinages statoriques adjacents suivant la circonférence sont connectés dans différents jeux parmi les jeux d'enroulements statoriques (20,22), de sorte que le couplage magnétique, entre les jeux des jeux d'enroulements statoriques, dû au courant de fuite dans les encoches, est évité.

2. Alternateur triphasé selon la revendication 1, caractérisé en ce que dans chaque groupe de bobinages triphasés, n- partie entière (n/2) bobinage(s) statorique(s) dans chaque jeu de n bobinages monophasés successivement enroulés est/sont connecté(s) en série avec partie entière (n/2) bobinage(s) statorique(s) d'un autre groupe de bobinages triphasés pour définir un des composants d'enroulement (1A-10C') pour un des jeux des jeux d'enroulements statoriques (20,22), et partie entière (n/2) bobinage(s) statorique(s) restant de ce jeu de n bobinages monophasés successivement enroulés est/sont connecté(s) en série avec n- partie entière (n/2) bobinage(s) statorique(s) d'un autre groupe de bobinages triphasés pour définir un des composants d'enroulement pour l'autre jeu des jeux d'enroulements statoriques.

3. Alternateur triphasé selon la revendication 1 ou 2, caractérisé en ce que n est égal à 3 ; en ce qu'il y a P/2 composants d'enroulements (1A-10C') dans chaque jeu des jeux d'enroulements statoriques (20,22) ; et en ce que les bobinages statoriques ($C_1$-$C_{90}$), englobent chacun 7 encoches statoriques ($S_1$-$S_{90}$) pour définir un pas d'enroulements de 8/9, de telle façon que dans chaque groupe de bobinages triphasés, deux bobinages statoriques dans chaque jeu de trois bobinages monophasés successivement enroulés sont connectés en série avec un bobinage statorique d'un autre groupe de bobinages triphasés pour définir un des composants d'enroulement pour un jeu des jeux d'enroulements statoriques (20,22), et un bobinage statorique de ce jeu de trois bobinages monophasés successivement enroulés est connecté en série avec deux bobinages statoriques de l'autre groupe de bobinages triphasés pour définir un des composants d'enroulement pour l'autre jeu des jeux d'enroulements statoriques.

**Ansprüche**

1. Dreiphasen-Wechselstromlichtmaschine (14) mit einem Rotor (18) mit P Polen; und einem Stator mit 3nP Statorschlitzen ($S_1$-$S_{90}$) und 3nP Statorwicklungen ($C_1$-$C_{90}$), die darin zur Bildung von P Gruppen von Dreiphasenwicklungen in überlappender Beziehung angeordnet sind, wobei n eine ganze Zahl größer oder gleich 2 ist; wobei jede solche Gruppe von Dreiphasenwicklungen drei Reihen von n aufeinanderfolgend gewickelten Einzelphasenwicklungen umfaßt, die Einzelphasenwicklungen miteinander verbunden sind zum Bestimmen von zwei elektrisch getrennten Reihen von Statorwicklungen (20, 22) zum Zuführen von Dreiphasen-Wechselstrom zu unterschiedlich gesteuerten elektrischen Lasten (66, 74), wobei jede solche Reihe von Statorwikklungen eine Gruppe von Wicklungskomponenten (1A-10C') für jede Phase umfaßt, und jede solche Wicklungskomponente n in Reihe geschaltete Statorwicklungen umfaßt, wobei die Statorwicklungen ($C_1$-$C_{90}$) und die Einzelphasenwicklungen ein und dieselben sind, wobei die Statorwicklungen ($C_1$-$C_{90}$) jeweils eine ungerade Anzahl von Statorschlitzen ($S_1$-$S_{90}$) überspannen und wobei jede Wicklungskomponente (1A-10C') aus einer bestimmten Reihe von Statorwicklungsreihen INT(n/2) Statorwicklungen von einer Gruppe Dreiphasenwicklungen und n-INT(n/2) Statorwicklungen von einer unterschiedlichen Gruppe Dreiphasenwicklungen umfaßt, wodurch die in irgendeinem Statorschlitz angeordneten Statorwicklungen nur in einer Reihe von Statorwicklungsreihen angeschlossen sind, dadurch gekennzeichnet, daß die Statorwicklungen so geschaltet sind, daß in Umfangsrichtung benachbarte Statorwicklungen in unterschiedlichen Reihen der Statorwicklungsreihen (20,22) geschaltet sind, wodurch magnetische Kopplung zwischen den Reihen von Statorwicklungsreihen infolge von Schlitzverlusten vermieden ist.

2. Dreiphasen-Wechselstromlichtmaschine nach Anspruch 1, dadurch gekennzeichnet, daß in jeder Gruppe von Dreiphasenwicklungen n-INT(n/2) Statorwicklungen in jeder Reihe von n aufeinanderfolgend gewickelten Einzelphasenwicklungen in Reihe mit INT(n/2) Statorwicklungen von einer anderen Gruppe von Dreiphasenwicklungen angeschlossen sind, um eine der Wicklungskomponenten (1A-10C') für eine Reihe von Statorwicklungsreihen (20,22) zu bestimmen, und daß die restlichen INT(n/2) Statorwicklungen jeder Reihe von n aufeinanderfolgend gewickelten Einzelphasenwicklungen in Reihe mit n-INT(n/2) Statorwicklungen von einer anderen Reihe von Dreiphasenwicklungen geschaltet sind, um eine der Wicklungskomponenten für die andere Reihe von Statorwicklungsreihen zu bestimmen.

3. Dreiphasen-Wechselstromlichtmaschine nach Anspruch 1 oder 2, dadurch gekennzeichnet, daß n gleich 3 ist; daß P/2 Wicklungskomponenten (1A-10C') in jeder Reihe von Statorwicklungsreihen (20,22) vorhanden sind; und daß die Statorwicklungen ($C_1$-$C_{90}$) jeweils sieben Statorschlitze ($S_1$-$S_{90}$) überspannen, um eine Wicklungsteilung von 8/9 zu bestimmen, so daß in jeder Gruppe von Dreiphasenwicklungen zwei Statorwicklungen in jeder Reihe von drei aufeinanderfolgend gewickelten Einzelphasenwicklungen in Reihe mit einer Statorwicklung von einer anderen Gruppe von Dreiphasenwicklung geschaltet sind, um eine der Wicklungskomponenten für eine Reihe von Statorwicklungsreihen (20,22) zu bestimmen, und eine Statorwicklung dieser Reihe aus drei aufeinanderfolgend gewickelten Einzelphasenwicklungen in Reihe mit zwei Statorwicklungen von der anderen Gruppe von Dreiphasenwicklungen geschaltet ist, um eine der Wicklungskomponenten für die andere Reihe von Statorwicklungsreihen zu bestimmen.

Fig. 1

Fig. 2

Fig. 5